# EUROPÄISCHE PATENTSCHRIFT

(11) **EP 2 979 903 B1**
(45) Veröffentlichungstag und Bekanntmachung des Hinweises auf die Patenterteilung: **18.03.2020**
(21) Anmeldenummer: 15171080.3
(22) Anmeldetag: 09.06.2015
(51) Int. Cl.: B60C 11/03, B60C 11/12, B60C 11/13

(54) **FAHRZEUGLUFTREIFEN**
PNEUMATIC TYRES FOR A VEHICLE
PNEUMATIQUES DE VEHICULE

(30) Priorität: 01.08.2014 DE 102014215251
(43) Veröffentlichungstag der Anmeldung: 03.02.2016
(73) Patentinhaber: Continental Reifen Deutschland GmbH, 30165 Hannover (DE)
(72) Erfinder: Brandau, Christian, 30419 Hannover (DE); Schlittenhard, Jan, 30900 Wedemark (DE)
(74) Vertreter: Finger, Karsten

(56) Entgegenhaltungen:
- EP-A1- 1 437 238
- WO-A1-01/39996
- US-A1- 2010 218 867

## Beschreibung

Die Erfindung betrifft einen Fahrzeugluftreifen mit einem Profilelemente aufweisenden Laufstreifen, wobei zumindest ein Profilelement mit mehreren parallel zueinander und beabstandet voneinander angeordneten Feineinschnitten versehen ist, wobei dieses Profilelement eine maximale Breite aufweist, von der aus sich die Breite des Profilelementes in Längsrichtung dieses Profilelementes verringert und wobei jeder Feineinschnitt korrespondierende Feineinschnittwände aufweist, welche in Aufsicht auf den Laufstreifen die Form einer Welle mit einer bestimmten Amplitude, mit einer bestimmten Anzahl an Wellenbäuchen und mit einer bestimmten Wellenlänge aufweisen.

Ein derart ausgeführter Fahrzeugluftreifen ist hinreichend bekannt. Es ist bei Laufstreifenprofilen von Winterreifen üblich, Feineinschnitte innerhalb der erhabenen Profilelemente vorzusehen. Feineinschnitte sind Einschnitte, welche innerhalb der Profilelemente wie Profilbänder oder Profilblöcke üblicherweise mit einer Breite zwischen 0,3 mm und 0,7 mm und einer Länge zwischen 8 mm und 60 mm angeordnet sind. Die Feineinschnitte dienen bei winterlichen Bedingungen u.a. dazu, Schnee aufzunehmen, um die Schnee/Schnee - Reibung zu erhöhen, um Griffkanten auszubilden und somit eine sichere Verzahnung mit dem Untergrund herzustellen, und derart eine bessere Haftung des Reifens auf winterlicher Fahrbahn zu ermöglichen.

Ein weiterer wesentlicher Effekt bei wellenförmigen Feineinschnitten sind Verzahnungseffekte der einander gegenüberliegenden Feineinschnittwände eines Feineinschnittes. Durch die beim Handling auftretenden Querkräfte werden die Profilelemente in lateraler Richtung verformt. Jedoch ist die Höhe der Verformung der jeweiligen Profilelemente abhängig von ihren lateralen Steifigkeitsunterschieden. Schmale Elemente sind weicher und verformen sich stärker, breite Elemente sind steifer und verformen sich weniger.
Über die verschränkten Feineinschnittswandflächen können sich die Profilelemente gegeneinander abstützen und erlagen so eine höhere Quersteifigkeit, was die Handlingeigenschaften positiv beeinflusst.

Es gibt eine Vielzahl an bekannten Ausbildungen von Feineinschnitten. Am bekanntesten ist eine Ausbildung, bei der der Feineinschnitt in Profilaufsicht etwa sinusförmig ausgebildet ist und in seinem Tiefenverlauf innerhalb des Profilblockes unverändert ist (sogenannter 2-dimensionaler Feineinschnitt). Feineinschnitte mit im Tiefenverlauf veränderter Geometrie werden als 3-dimensionale Feineinschnitte bezeichnet.

Ein Feineinschnitt reicht zumeist von einer Profilelementwand zur anderen Profilelementwand und quert das Profilelement vollständig. Es sind aber auch Feineinschnitte bekannt, die mit einen oder mit beiden Enden innerhalb des Profilelementes enden. Die Wellenausbildung von wellenförmigen Feineinschnitten ist meist nur im mittigen Bereich des Feineinschnittes ausgebildet, während die beiden axialen Enden des Feineinschnittes beispielsweise als Gerade ausgebildet sind. Generell sind die Feineinschnitte im Profilelement etwa parallel zu wenigstens einer Kante des Profilelementes angeordnet oder die Feineinschnitte sind zu keiner Kante des Profilelementes parallel angeordnet.

Profilelemente weisen oftmals - über ihre Erstreckung in Längsrichtung (=Längserstreckung) betrachtet - eine sich verändernde Breite auf. Das Profilelement wird über seine Längserstreckung breiter oder schmaler. Die unterschiedliche Breite in einem Profilelement bewirkt eine unterschiedliche Quersteifigkeit des Profilelementes über seine Längserstreckung und wirkt sich somit auf die Handlingeigenschaften des Reifens aus. Vereinfacht gesagt weist ein Profilelement an einer breiten Stelle eine höhere Quersteifigkeit auf als an einer schmaleren Stelle. Bisher ist es im Stand der Technik bekannt, wellenförmige Feineinschnitte sowohl im breiten als auch im schmalen Bereich des Profilelementes mit gleicher Wellenlänge und mit gleicher Amplitude anzuordnen, was zur Folge hat, dass die Anzahl der Wellenbäuche in schmaleren Profilelementbereichen geringer ist als in breiten Profilelementbereichen. Durch die geringere Anzahl an Wellenbäuchen in schmaleren Profilelementbereichen ist die für die Verschränkung zur Verfügung stehende Gesamtfläche der Feineinschnittwände verringert, wodurch der Verschränkungseffekt verringert ist und somit eine geringere Steifigkeit des Profilelementbereiches erzielt ist. Die Steifigkeit, insbesondere die Quersteifigkeit, ist über die Längserstreckung des Profilelementes ungleich, was sich nachteilig auf das Handling auswirkt.

Aus der WO 01/39996 A1 ist ein Fahrzeugluftreifen mit einem Laufstreifen bekannt, welcher in jeder Laufstreifenhälfte ein Schulterblockreihe sowie zwei nebeneinander verlaufende mittlere Profilblockreihen aufweist. Die Profilblöcke von jeweils einer der beiden mittleren Profilblockreihen sind in Draufsicht trapezartig gestaltet und mit in Draufsicht parallel verlaufenden Feineinschnitten versehen. Die Profilblöcke der beiden mittleren Profilblockreihe sind voneinander durch in Draufsicht T-förmig verlaufende Rillen getrennt.

Die EP 1 437 238 A1 offenbart einen Fahrzeugluftreifen mit einem Laufstreifen mit in Profilblockreihen angeordneten Profilblöcken, welche durch Umfangs- und Schrägrillen begrenzt sind. Die Profilblöcke sind mit in Draufsicht parallel zueinander und jeweils wellenförmig verlaufenden Feineinschnitten versehen. Die Wellenform jedes Feineinschnittes ist derart, dass im Bereich eines

Wellenberges bzw. Wellentales die Amplitude der Welle gegenüber der Amplitude im Bereich der sonstigen Wellenberge und Wellentäler überhöht, also größer, ist. Die Wellenberge bzw. Wellentäler mit überhöhter Amplitude von innerhalb eines Profilblockes ausgebildeten Einschnitten sind miteinander fluchtend ausgebildet.

Aus der US 2010/0218867 A1 ist ein weiterer Fahrzeugluftreifen mit einem Laufstreifen mit Einschnitten in Profilblöcken bekannt. An den Einschnittwänden sind von der Laufstreifenperipherie ausgehend und in radialer Richtung in die Einschnitte hineinverlaufende Vertiefungen ausgebildet, deren Tiefe von der Laufstreifenperiphere ins radial Innere des jeweiligen Einschnittes kontinuierlich abnimmt. In Draufsicht weisen die Einschnitte einen wellenartigen Verlauf auf.

Der Erfindung liegt die Aufgabe zu Grunde, die Performance eines insbesondere für einen Wintereinsatz vorgesehenen Fahrzeugluftreifens zu verbessern, insbesondere soll eine Vergleichmäßigung der Quersteifigkeit in breiter bzw. schmaler werdenden Profilelementen für ein verbessertes Handlingverhalten erreicht werden.

Gelöst wird die gestellte Aufgabe erfindungsgemäß dadurch, dass alle wellenförmigen Feineinschnitte in einem bestimmten Abschnitt des Profilelementes, welcher bei der maximalen Breite des Profilelementes beginnt und sich in Längsrichtung des Profilelementes bis zu einer minimalen Breite des Profilelementes erstreckt und dort endet, gleiche Amplituden und gleiche Anzahl an Wellenbäuchen, und somit in Richtung minimaler Breite kleiner werdende Wellenlängen der Feineinschnitte aufweisen, wobei die minimale Breite die schmalste Breite im Profilelement ist, welche der Bedingung Bmax / Bmin = 1,1 bis 7 genügt, mit Bmin = 5 mm bis 55 mm.

Erfindungsgemäß sind die Amplituden und die Anzahlen an Wellenbäuchen aller Feineinschnitte gleich. Hierdurch bedingt ist an der maximalen Breite des Profilelementes, an der der Feineinschnitt eine größte Länge aufweist, die Wellenlänge am größten, während an der minimalen Breite des Profilelementes, an der der Feineinschnitt innerhalb des bestimmten Abschnittes eine kleinste Länge aufweist, die Wellenlänge am kleinsten. Die Feineinschnitte zwischen diesen beiden vorgenannten Feineinschnitten weisen entsprechende Abstufungen in Bezug auf die Wellenlänge auf.

Die Wellenlänge innerhalb eines einzigen Feineinschnittes ist immer gleich und ändert sich über dessen Länge nicht.

Der bestimmte Abschnitt des Profilelementes, welcher von der maximalen Breite zur minimalen Breite reicht, muss definiert werden, da eine Mindestbreite des Profilelementes vorhanden sein muss, um den Feineinschnitt mit seiner bestimmten Anzahl an Wellenbäuchen und seiner bestimmten Amplitude unterbringen zu können. Dabei soll der bestimmte Abschnitt eine möglichst große Fläche des Profilelementes einnehmen.

Durch die gleiche Anzahl an Wellenbäuchen aller Feineinschnitte bei gleichen Amplituden und durch Verringerung der Wellenlängen bei kürzeren Feineinschnitten in schmaler werdenden Profilelementbereichen ist bewirkt, dass in dem schmaleren Bereich des Profilelementes mit kürzeren Feineinschnitten der Anteil der Verzahnungsfläche pro Feineinschnittswandfläche größer ist als bei längeren Feineinschnitten in breiteren Bereichen des Profilelementes. Hierdurch ist eine höhere Verzahnung auf schmalem Raum bewirkt, so dass der weniger steife schmale Profilelementbereich durch die Verzahnung steifer wird. Insgesamt ist eine Vergleichmäßigung der Steifigkeit, insbesondere der Quersteifigkeit des Profilelementes über dessen Längserstreckung erreicht. Breitere Profilelementbereiche, welche an sich steifer sind, sind weniger stark durch Verschränkungseffekte der Feineinschnitte versteift, als schmalere Profilelementbereiche, welche an sich weicher sind und nun erfindungsgemäß stärker durch Verschränkungseffekte der Feineinschnitte versteift sind.

"Mehrere Feineinschnitte" meint wenigstens drei Feineinschnitte. "Maximale Breite eines Profilelementes" meint die breiteste Stelle des Profilelementes, welche sich parallel zur Längserstreckung des nächstliegenden Feineinschnittes erstreckt und von einer Längsseite zur anderen Längsseite des Profilelementes reicht.
"Minimale Breite eines Profilelementes" meint die schmalste Stelle des Profilelementes, welche der Bedingung Bmax (maximale Breite) / Bmin (minimale Breite) = 1,1 bis 7, bevorzugt 1,8 bis 4,6 mit Bmin = 5 mm bis 55 mm entspricht und welche sich parallel zur Längserstreckung des nächstliegenden Feineinschnittes erstreckt und von einer Längsseite zur anderen Längsseite des Profilelementes reicht. Weist das Profilelement seine maximale Breite im mittigen Bereich des Profilelementes auf, und verjüngt sich das Profilelement von dort aus in Längserstreckung zu beiden Seiten, dann gibt es auf jeder sich verjüngenden Seite je eine minimale Breite.
"Längsrichtung des Profilelementes" meint die Erstreckung in Längsrichtung des Profilelementes, welche senkrecht auf die Längserstreckung der Feineinschnitte dieses Profilelementes verläuft.

Zweckmäßig ist es, wenn die minimale Breite eine Breite ist, die der Bedingung Bmax / Bmin = 1,1 bis 7, bevorzugt von 1,8 bis 4,6 genügt, mit Bmin = 5 mm bis 55 mm. Der Vorteil der nach den gegebenen Bedingungen ausgeführte Gestaltung liegt in der Möglichkeit, eine sinnvolle und auch produzierbare Anzahl und Größe von Schwingungen und Schwingungsamplituden in die Feineinschnitte einzubringen zu können.

Zum Beispiel: Wird die Feineinschnittslänge bedingt durch ein schmales Profilelement zu gering, dann können aus produktionstechnischen Gründen nur eine geringe Anzahl an Schwingungen realisiert werden, welche in breiten Profilelementen zu einer zu geringen Verzahnungsfläche in den Feineinschnitten führen würde, welches die Handlingeigenschaften auf trockenen und den Quergriff auf winterlichen Untergründen verschlechtern würde.

Auf der anderen Seite ist eine Verwendung von noch breiteren Profilelementen aus Gründen der Verschlechterung der Aquaplaning und "Slushplaning" (auf Schneematsch) nicht zu empfehlen, da die "Squeeze-out Zeit" zu groß würden, d.h. die benötigte Zeit um das "Trennmittel" Wasser oder Schneematsch aus der Kontaktfläche zwischen Profilblock und der Straßenoberfläche aus der Kontaktzone zu pressen und so eine sichere Straßenhaftung herzustellen.

Zweckmäßig ist es, wenn die Feineinschnittwände - in Aufsicht auf den Laufstreifen - die Form einer etwa sinusförmigen Welle, einer stufenförmigen Welle oder einer zickzackförmigen Welle aufweisen.

Vorteilhaft ist es, wenn die stufenförmige Welle einander abwechselnde Abschnitte aus Trittstufen und aus Setzstufen aufweist, wobei die Setzstufen kürzer als die Trittstufen sind, wobei die Setzstufen vorzugsweise als Geraden gleicher Länge ausgebildet sind und einen Winkel zwischen 0° und 80° mit der Längsrichtung des Profilelementes einschließen, während die Trittstufen vorzugsweise als Radien ausgebildet sind und je zwei benachbarte Setzstufen miteinander verbinden. Durch die Anordnung der Setzstufen in dem vorgenannten Winkel und deren Verschränkungseffekte ist insbesondere eine Vergleichmäßigung der Quersteifigkeit erreicht. Durch diese Art der Gestaltung verändert sich der eingeschlossene Winkel zwischen den Setzstufen und den Trittstufen derart, dass sich der eingeschlossene Winkel von dem längeren Feineinschnitten zu den kürzeren Feineinschnitten hin, verkleinert. Dieser kleinere Winkel bewirkt, dass auch die Trittstufen zu einem Teil zur Verzahnungsfläche beitragen und somit zu einer weiteren Versteifung der schmaleren Profilelementbereiche führt, was zu einer größeren Gleichmäßigkeit der Quersteifigkeit im gesamten Profilelement führt.

Dabei ist es vorteilhaft, wenn in dem bestimmten Abschnitt mit stufenförmigen Feineinschnitten zur Verkleinerung der Wellenlänge die Länge der Trittstufen verringert ist, während alle Setzstufen aller Feineinschnitte gleichlang sind. Da die Länge der Setzstufen, besonders in den breiten Profilelementen, die Höhen der Querabstützung determiniert, hat es sich als vorteilhaft erwiesen, in allen Bereichen entlang des Feinabschnitts eine gleichbleibende Querabstützung zu erzeugen, um ein möglichst gleichmäßiges Abriebsbild und eine gleichmäßige Querverzahnung auf winterlichen Untergründen zu erzeugen.

Generell entspricht die maximale Breite bei kantenparallel innerhalb eines sich ausschließlich verjüngenden Profilblockes angeordneten Feineinschnitten der breiteren, feineinschnittparallel angeordneten Kante des Profilelementes, während die minimale Breite entweder - bei Erfüllung der Bedingung Bmax/Bmin = 1,1 bis 7, mit Bmin = 5 mm bis 55 mm - der gegenüberliegenden kurzen Kante entspricht, oder innerhalb des Profilelementes angeordnet ist.
Bei nicht kantenparallel innerhalb eines Profilblockes angeordneten Feineinschnitten verlaufen sowohl die maximale Breite als auch die minimale Breite innerhalb des Profilelementes.

In einer bestimmten Ausführung weist das Profilelement in Aufsicht eine trapezoide Form auf. Mit dieser Art der Gestaltung ist eine sehr hohe Strukturierung der Profiloberfläche erreicht, was sich grundsätzlich positiv auf die Wintereigenschaften auswirkt.

In einer anderen Ausführung weist das Profilelement in Aufsicht eine doppelttrapezoide Form auf, indem zwei trapezoide Formen mit ihren beiden gleichlangen Grundseiten der Trapeze aneinander angrenzend angeordnet sind, wobei jeder Feineinschnitt des Profilelementes parallel zu diesen gleichlangen Grundseiten der Trapeze angeordnet ist. Bei dieser Art der Anordnung lassen sich besonders gut bei längeren Profilelementen, wie bei langgestreckten Profiblöcken, eine hohe geometrische Verzahnung des Profilelementes erreichen, ohne dass dieses Profilelement eine optimale Breite nicht überschreitet.

Desweiteren lassen sich mit diesen doppelt-trapezoiden Profilelementen bandähnliche Profilelemente oder gar geschlossene Bänder mit erhöhter Umfangssteifigkeit zur Verbesserung der Trockenbremseigenschaften gestalten.

In einer wiederum anderen Ausführung weist das Profilelement in Aufsicht eine Kombination aus einer trapezoiden Form und einer dreickigen Form auf, indem die Basis der dreieckigen Form an die gleichlange lange Grundseite des Trapezes aneinander angrenzend angeordnet ist, wobei jeder Feineinschnitt des Profilelementes parallel zu dieser Basis der dreickigen Form und der gleichlangen langen Grundseite des Trapezes angeordnet ist. Durch eine derartige Profilgestaltung können die Umfangsnuten, zwischen Schulterblöcken und den Profilelementen der Halbmitte, bevorzugt bogenförmig zur Centerline geführt werden und so zur Verbesserung der Aquaplaningeigenschaften verwendet werden.

Vorteilhaft ist es, wenn das Profilelement einen oder mehrere Rilleneinschnitt(e) aufweist, welche eine Breite von 2 mm bis 6 mm, vorzugsweise von 3mm aufweisen und welche mit der das Profilelement begrenzenden Rille in Verbindung steht, in das Profilelement reichen und im Profilelement enden. Hierdurch ist eine sehr gute Profilverzahnung erreicht.

Vorteilhaft ist es, wenn die Feineinschnitte 3D-Feineinschnitte sind, deren Geometrie über die Tiefenerstreckung verändert ist. Bevorzugt werden Feineinschnitte eingesetzt, deren Amplitude in radialer Richtung abnimmt und somit im Feineinschnittgrund in einer Geraden oder in einem Bogen ohne Richtungswechsel auslaufen.

Weitere Merkmale, Vorteile und Einzelheiten der Erfindung werden nun anhand der Zeichnungen, die schematische Ausführungsbeispiel darstellen, näher beschrieben. Dabei zeigen die
Fig. 1 eine Aufsicht auf ein Profilelement mit kantenparallelen Feineinschnitten in trapezoider Form;
Fig. 2 eine Aufsicht auf ein Profilelement mit kantenparallelen Feineinschnitten in doppelt trapezoider Form;
Fig. 3 eine Aufsicht auf ein anderes Profilelement mit Feineinschnitten in doppelt trapezoider Form;
Fig. 4 eine Aufsicht auf ein anderes Profilelement mit Feineinschnitten in trapezoid-dreieckiger Form;
Fig. 5 eine Aufsicht auf ein weiteres Profilelement mit Feineinschnitten in trapezoid-dreieckiger Form.

Die Erfindung befasst sich mit einer besonderen Ausführung von Feineinschnitten in Profilelementen von Laufstreifen, wie Profilblöcke oder Profilrippen, in Fahrzeugluftreifen, insbesondere Winterreifen für Personenkraftwagen.

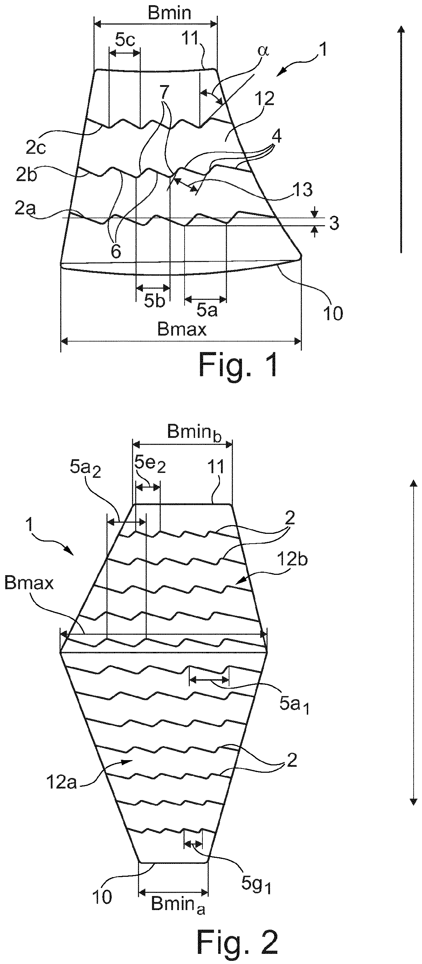

Die Fig. 1 zeigt eine Aufsicht auf ein Profilelement 1 in trapezoider Form mit 3D-Feineinschnitten 2. Anhand der Fig. 1 ist exemplarisch auch für die weiteren Figuren das Wesen der Erfindung erläutert.
Der erfindungsgemäße Fahrzeugluftreifen weist einen Laufstreifen mit zumindest einem Profilelement 1, dem hier gezeigten Profilblock 1 in trapezoider Form, auf. Dieser Profilblock 1 weist mehrere, parallel zueinander, beabstandet voneinander zu den Blockkanten 10, 11 parallel angeordnete Feineinschnitte 2a, 2b, 2c auf. Jeder Feineinschnitt 2a, 2b, 2c weist korrespondierende Feineinschnittwände auf, welche in Aufsicht auf den Laufstreifen der Form einer Welle mit einer bestimmten Amplitude 3, mit einer bestimmten Anzahl an Wellenbäuchen 4 und mit einer bestimmten Wellenlänge 5a, 5b, 5c entsprechen. Die Feineinschnitte 2a, 2b, 2c sind hier "stufenförmige" Wellen. In einem bestimmten Abschnitt 12 des Profilblockes 1, welcher an der maximalen Breite Bmax beginnt und in Längserstreckung des Profilblockes (Pfeil) bis zur minimalen Breite Bmin reicht und dort endet, weisen alle wellenförmigen Feineinschnitte 2a, 2b, 2c gleiche Amplituden 3 und gleiche Anzahl an Wellenbäuchen 4, hier jeweils acht Wellenbäuche auf. Jedoch werden in Richtung minimaler Breite Bmin die Wellenlängen 5a, 5b, 5c der Feineinschnitte 2a, 2b, 2c kleiner. Das bedeutet konkret, dass die Wellenlänge 5a des Feineinschnittes 2a, welcher am nächsten zur maximalen Breite Bmax angeordnet ist, eine größere Wellenlänge als der mittlere Feineinschnitt 2b aufweist, während der mittlere Feineinschnitt 2b eine wiederum größere Wellenlänge 5b als der Feineinschnitt 2c aufweist, welcher am nächsten zur minimalen Breite Bmin angeordnet ist. Laut Definition ist die minimale Breite Bmin die schmalste Breite im Profilelement 1, welche der Bedingung Bmax / Bmin = 1,1 bis 7 genügt, mit min = 5 mm bis 55 mm. Hier nimmt der bestimmte Abschnitt fast die gesamte Oberfläche des Profilblockes 1 ein. Die maximale Breite Bmax entspricht hier etwa der langen Grundseite der trapezoiden Form, welche eine erste Blockkante 10 ist. Die minimale Breite Bmin entspricht hier der kurzen Grundseite der trapezoiden Form, welche eine der ersten Blockkante 10 gegenüberliegende zweite Blockkante 11 ist. Der Feineinschnitt 2 in Form einer stufenförmigen Welle weist einander abwechselnde Abschnitte aus Trittstufen 6 und aus Setzstufen 7 auf, wobei die Setzstufen 7 kürzer als die Trittstufen 6 sind. Die Setzstufen 7 sind als Geraden gleicher Länge ausgebildet und schließen einen Winkel α zwischen 0° und 80° mit der Längserstreckung des Profilelementes 1 ein. Die Trittstufen 6 sind als Radien ausgebildet, wobei eine Trittstufe 6 zwei benachbarte Setzstufen 7 miteinander verbindet. Zur Verkleinerung der Wellenlänge 5 ist die Länge 13 der Trittstufen verringert, während alle Setzstufen aller Feineinschnitte gleichlang sind. Die Feineinschnitte 2 sind etwa parallel zu der ersten und zweiten Blockkante 10, 11 angeordnet.

Die Fig. 2 zeigt eine Aufsicht auf ein Profilelement 1 mit Feineinschnitten 2 in doppelt-trapezoider Form. Es sind zwei trapezoide Formen mit ihren beiden gleichlangen Grundseiten aneinander angrenzend angeordnet, wobei diese Grundseiten der maximalen Breite Bmax entsprechen. Oberhalb und unterhalb von der maximalen Breite Bmax befindet sich jeweils eine sich verjüngende trapezoide Form, welche gemeinsam den Profilblock 1 bilden. Das Profilelement 2 weist zwei bestimmte Abschnitte 12a, 12b auf, welche ausgehend von der maximalen Breite Bmax bis zur minimalen Breite Bmin in Längserstreckung des Profilblockes (Pfeil) reichen und dort enden. In beiden bestimmten Abschnitten 12a, 12b weisen alle wellenförmigen Feineinschnitte 2 gleiche Amplituden 3 und gleiche Anzahl an Wellenbäuchen 4, hier jeweils 8 Wellenbäuche, auf. Jedoch werden in Richtung der minimaler Breite Bmin die Wellenlängen 5 der Feineinschnitte 2 kleiner. Laut Definition ist die minimale Breite Bmin die schmalste Breite im Profilelement 1, welche der Bedingung Bmax / Bmin = 1,1 bis 7 genügt, mit Bmin = 5 mm bis 55 mm. Die beiden bestimmten Abschnitte 12a, 12b nehmen die gesamte Oberfläche des Profilblockes 1 ein. Die minimale Breiten Bmin a,b entsprechen hier den kurzen Grundseiten der trapezoiden Formen, welches der ersten Blockkante 10 und der gegenüberliegenden zweiten Blockkante 11 entsprechen. Die Feineinschnitte 2 sind etwa parallel zu der ersten und zweiten Blockkante 10, 11 angeordnet.

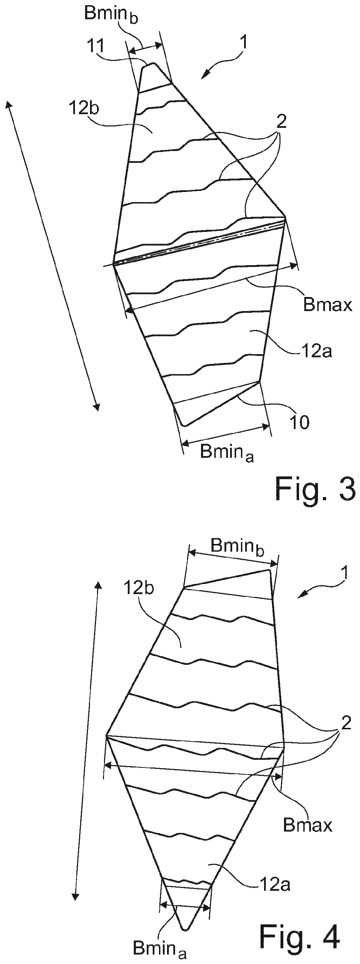

Die Fig. 3 zeigt eine Aufsicht auf ein anderes Profilelement 1 mit Feineinschnitten 2 in doppelt trapezoider Form. Das Profilelement 1 der Figur 3 unterscheidet sich von dem Profilelement 1 der Figur 2 darin, dass die Feineinschnitte 2 an einer Blockkante 10 nicht parallel im Profilelement 1 angeordnet sind. Somit liegen sowohl die minimale Breite Bmin als auch die maximale Breite Bmax innerhalb des Profilblockes 1. Ebenfalls sind die Anzahl der Feineinschnitte 2 als auch die Wellenausbildung der Feineinschnitte 2 verschieden von denen der Figur 2.

Die Fig. 4 zeigt eine Aufsicht auf ein anderes Profilelement 1 mit Feineinschnitten 2 in trapezoid-dreieckiger Form. Das Profilelement 1 ist aus einer trapezoiden Form und einem Dreieck an der langen Grundseite der trapezoiden Form und der Grundseite des Dreiecks zusammengesetzt. Hier befindet sich die maximale Breite Bmax. Das Profilelement 1 weist zwei bestimmte Abschnitte 12a, 12b auf, welche beidseitig ausgehend von der maximalen Breite Bmax in Längserstreckung (Pfeil) bis zur minimalen Breite Bmin des Profilblockes reichen und dort enden. In beiden bestimmten Abschnitten weisen alle wellenförmigen Feineinschnitte 2 gleiche Amplituden und gleiche Anzahl an Wellenbäuchen auf. Jedoch werden in Richtung minimaler Breite Bmin a, b die Wellenlängen der Feineinschnitte 2 kleiner. Die Feineinschnitte sind nicht blockkantenparallel im Profilelement 1 angeordnet. Somit liegen beide minimale Breiten Bmin a,b innerhalb des Profilblockes 1. Die Geometrie der Feineinschnitte 2 entspricht der der Fig. 3.

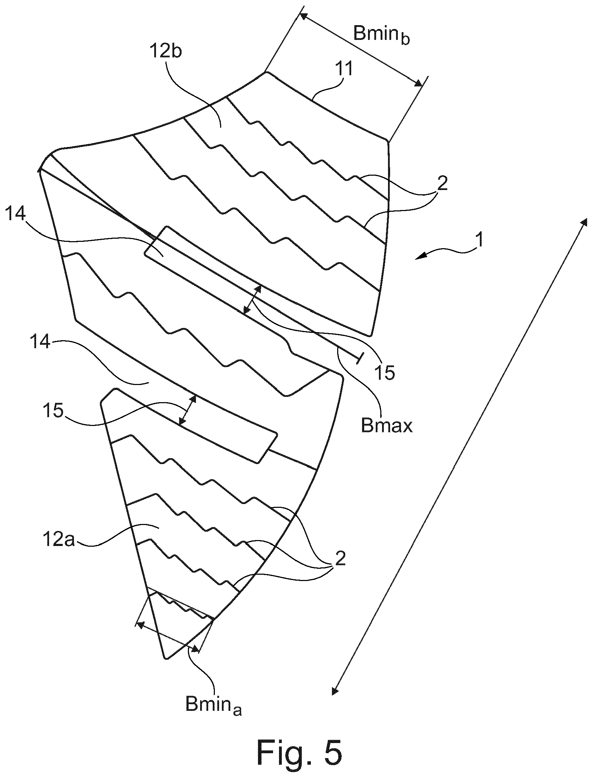

Fig. 5 zeigt eine Aufsicht auf ein weiteres Profilelement 1 mit Feineinschnitten 2 in trapezoid-dreieckiger Form. Das Profilelement 1 ist aus einer trapezoiden Form und einem Dreieick an der langen Grundseite der trapezoiden Form und der Grundseite des Dreiecks zusammengesetzt. Hier befindet sich die maximale Breite Bmax. Das Profilelement 2 weist zwei bestimmte Abschnitte 12a, 12b auf, welche beidseitig ausgehend von der maximalen Breite Bmax in Längserstreckung (Pfeil) bis zur minimalen Breite Bmin a,b des Profilblockes 1 reichen und dort enden. In beiden bestimmten Abschnitten 12a, 12b weisen alle wellenförmigen Feineinschnitte 2 gleiche Amplituden und gleiche Anzahl an Wellenbäuchen auf. Jedoch werden in Richtung minimaler Breite Bmin a,b die Wellenlängen der Feineinschnitte 2 kleiner.. Die Feineinschnitte 2 des bestimmten Abschnittes 12b sind blockkantenparallel 11 im Profilelement 1 angeordnet. Die minimale Breite Bmin b des trapezoiden Abschnittes 12b entspricht der kurzen Grundseite der trapezoiden Form und somit der Profilblockkante 11. Die minimale Breite Bmin a der dreieckförmigen Form des bestimmten Abschnittes 12a liegt innerhalb des Profilelementes 1.
Das Profilelement 1 weist zwei Rilleneinschnitte 14 auf, welche eine gleichbleibende oder sich nach außen verbreiternde Breite 15 von 3mm aufweisen und welche mit der das Profilelement 1 begrenzenden Rille in Verbindung stehen. Die Rilleneinschnitte 14 reichen von außen in das Profilelement 1 hinein und enden im Profilelement 1. Dabei ist ein Rilleneinschnitt 14 parallel zu und auf Höhe von der maximalen Breite Bmax des Profilelementes1 angeordnet und reicht zu ca. 2/3 der Breite des Profilelementes 1 in dieses hinein. Der zweite Rilleneinschnitt 14 ist etwa parallel zu dem ersten Rilleneinschnitt 14 angeordnet, reicht von der anderen Außenseite zu ca. 2/3 der Breite des Profilelementes 1 in dieses hinein.

### Bezugszeichenliste

- 1: Profilblock (Profilelement)
- 2: Feineinschnitt
- 3: Amplitude
- 4: Wellenbauch
- 5: Wellenlänge
- 6: Trittstufe
- 7: Setzstufe
- 8: Länge Trittstufe
- 9: Länge Setzstufe
- 10: Erste Blockkante
- 11: Zweite Blockkante
- 12: bestimmter Abschnitt
- 13: Länge der Trittstufe
- 14: Rilleneinschnitt
- 15: Breite des Rilleneinschnittes

- Bmax: maximale Breite des Profilblockes
- Bmin: minimale Breite des Profilblockes

## Patentansprüche

1. Fahrzeugluftreifen mit einem Profilelemente (1) aufweisenden Laufstreifen, wobei zumindest ein Profilelement (1) mit mehreren parallel zueinander und beabstandet voneinander angeordneten Feineinschnitten (2) versehen ist, wobei dieses Profilelement (1) eine maximale Breite (Bmax) aufweist, von der aus sich die Breite des Profilelementes in Längsrichtung dieses Profilelementes verringert und wobei jeder Feineinschnitt (2) korrespondierende Feineinschnittwände aufweist, welche in Aufsicht auf den Laufstreifen die Form einer Welle mit einer bestimmten Amplitude (3), mit einer bestimmten Anzahl an Wellenbäuchen (4) und mit einer bestimmten Wellenlänge (5) aufweisen,
**dadurch gekennzeichnet,**
**dass** alle wellenförmigen Feineinschnitte (2) in einem bestimmten Abschnitt (12) des Profilelementes, welcher bei der maximalen Breite (Bmax) des Profilelementes beginnt und sich in Längsrichtung des Profilelementes bis zu einer minimalen Breite (Bmin) des Profilelementes erstreckt und dort endet, gleiche Amplituden (3) und gleiche Anzahl an Wellenbäuchen (4), jedoch in Richtung minimaler Breite (Bmin) kleiner werdende Wellenlängen (5) der Feineinschnitte (2) aufweisen, wobei die minimale Breite (Bmin) die schmalste Breite im Profilelement ist, welche der Bedingung Bmax / Bmin = 1,1 bis 7 genügt, mit Bmin = 5 mm bis 55 mm.

2. Fahrzeugluftreifen nach Anspruch 1, **dadurch gekennzeichnet, dass** die minimale Breite (Bmin) eine Breite ist, die der Bedingung Bmax / Bmin = 1,8 bis 4,6 genügt, mit Bmin = 5 mm bis 55 mm.

3. Fahrzeugluftreifen nach Anspruch 1 oder 2, **dadurch gekennzeichnet, dass** die Feineinschnittwände die Form einer etwa sinusförmigen Welle, einer stufenförmigen Welle oder einer zickzackförmigen Welle aufweisen.

4. Fahrzeugluftreifen nach Anspruch 3, **dadurch gekennzeichnet, dass** die stufenförmige Welle einander abwechselnde Abschnitte aus Trittstufen (6) und aus Setzstufen (7) aufweist, wobei die Setzstufen (7) kürzer als die Trittstufen (6) sind, wobei die Setzstufen (7) vorzugsweise als Geraden gleicher Länge ausgebildet sind und einen Winkel α zwischen 0° und +/- 80° mit der Längsrichtung des Profilelementes einschließen, während die Trittstufen (6) vorzugsweise als Radien ausgebildet sind und je zwei benachbarte Setzstufen (7) miteinander verbinden.

5. Fahrzeugluftreifen nach Anspruch 3, **dadurch gekennzeichnet, dass** in dem bestimmten Abschnitt mit stufenförmigen Feineinschnitten zur Verkleinerung der Wellenlänge (5) die Länge der Trittstufen(13) verringert ist, während alle Setzstufen (7) aller Feineinschnitte (2) gleichlang sind.

6. Fahrzeugluftreifen nach einem oder mehreren der vorangehenden Ansprüche, **dadurch gekennzeichnet, dass** das Profilelement (1) in Aufsicht eine trapezoide Form aufweist.

7. Fahrzeugluftreifen nach einem der vorangehenden Ansprüche 1 bis 5, **dadurch gekennzeichnet, dass** das Profilelement (1) in Aufsicht eine doppelttrapezoide Form aufweist, indem beide trapezoide Formen mit ihren beiden gleichlangen Grundseiten der Trapeze aneinander angrenzend angeordnet sind und dass jeder Feineinschnitt (2) des Profilelementes (1) parallel zu diesen gleichlangen Grundseiten der Trapeze angeordnet ist.

8. Fahrzeugluftreifen nach einem der vorangehenden Ansprüche 1 bis 5, **dadurch gekennzeichnet, dass** das Profilelement (1) in Aufsicht eine Kombination aus einer trapezoiden Form und einer dreickigen Form ist, indem die Basis der dreieckigen Form an die gleichlange lange Grundseite des Trapezes aneinander angrenzend angeordnet sind und dass jeder Feineinschnitt (2) des Profilelementes (1) parallel zu dieser Basis der dreieckigen Form und der gleichlangen langen Grundseite des Trapezes angeordnet ist.

9. Fahrzeugluftreifen nach einem der vorangehenden Ansprüche 1 bis 8, **dadurch gekennzeichnet, dass** die Feineinschnitte (2) etwa parallel zu einer Kante (10, 11) des Profilelementes (1) angeordnet sind.

10. Fahrzeugluftreifen nach einem der vorangehenden Ansprüche 1 bis 8, **dadurch gekennzeichnet, dass** die Feineinschnitte (2) zu keiner Kante des Profilelementes (1) parallel angeordnet sind.

11. Fahrzeugluftreifen nach einem oder mehreren Ansprüchen, **dadurch gekennzeichnet, dass** das Profilelement (1) einen oder mehrere Rilleneinschnitte (14) aufweist, welche eine Breite (15) von 2 mm bis 6 mm, vorzugsweise von 3mm aufweisen und welche mit der das Profilelement (1) begrenzenden Rille in Verbindung stehen, in das Profilelement (1) hineinreichen und im Profilelement enden.

12. Fahrzeugluftreifen nach einem oder mehreren Ansprüchen, **dadurch gekennzeichnet, dass** die Feineinschnitte (2) 3D-Feineinschnitte sind, deren Amplituden in radialer Richtung abnehmen und im Feineinschnittgrund in einer Geraden oder in einem Bogen ohne Richtungswechsel enden.

## Claims

1. Vehicle pneumatic tyre with a tread having profile elements (1), wherein at least one profile element (1) is provided with a plurality of sipes (2) arranged parallel to one another and spaced apart from one another,
wherein said profile element (1) has a maximum width (Bmax) from which the width of the profile element is reduced in the longitudinal direction of said profile element, and wherein each sipe (2) has corresponding sipe walls which, in a top view of the tread, have the shape of a wave with a certain amplitude (3), with a certain number of wave loops (4) and with a certain wave length (5),
**characterized**
**in that** all of the wave-shaped sipes (2) in a certain portion (12) of the profile element, said portion beginning at the maximum width (Bmax) of the profile element and extending in the longitudinal direction of the profile element as far as a minimum width (Bmin) of the profile element and ending there, have the same amplitudes (3) and the same number of wave loops (4), but have wave lengths (5) of the sipes (2) becoming smaller in the direction of minimum width (Bmin), wherein the minimum width (Bmin) is the narrowest width in the profile element, said width satisfying the condition Bmax/Bmin = 1.1 to 7, where Bmin = 5 mm to 55 mm.

2. Vehicle pneumatic tyre according to Claim 1, **characterized in that** the minimum width (Bmin) is a width which satisfies the condition Bmax/Bmin = 1.8 to 4.6, where Bmin = 5 mm to 55 mm.

3. Vehicle pneumatic tyre according to Claim 1 or 2, **characterized in that** the sipe walls have the shape of an approximately sinusoidal wave, a stepped wave or a zigzag wave.

4. Vehicle pneumatic tyre according to Claim 3, **characterized in that** the stepped wave has mutually alternating portions of steps (6) and risers (7), wherein the risers (7) are shorter than the steps (6), wherein the risers (7) are preferably designed as straight lines of identical length and enclose an angle α of between 0° and +/- 80° with the longitudinal direction of the profile element, while the steps (6) are preferably designed as radii and in each case connect two adjacent risers (7) to each other.

5. Vehicle pneumatic tyre according to Claim 3, **characterized in that**, in the certain portion with stepped sipes, the length of the steps (13) is reduced in order to reduce the wave length (5), while all the risers (7) of all of the sipes (2) are of equal length.

6. Vehicle pneumatic type according to one or more of the preceding claims, **characterized in that** the profile element (1) has a trapezoidal shape in top view.

7. Vehicle pneumatic tyre according to one of the preceding Claims 1 to 5, **characterized in that** the profile element (1) in top view has a double trapezoidal shape by the two trapezoidal shapes being arranged with their two equally long base sides of the trapezoids adjacent to each other, and **in that** each sipe (2) of the profile element (1) is arranged parallel to said equally long base sides of the trapezoid.

8. Vehicle pneumatic tyre according to one of the preceding Claims 1 to 5, **characterized in that** the profile element (1) in top view is a combination of a trapezoidal shape and a triangular shape by the base of the triangular shape being arranged adjacent to the equally long long base side of the trapezoid, and **in that** each sipe (2) of the profile element (1) is arranged parallel to said base of the triangular shape and to the equally long long base side of the trapezoid.

9. Vehicle pneumatic tyre according to one of the preceding Claims 1 to 8, **characterized in that** the sipes (2) are arranged approximately parallel to an edge (10, 11) of the profile element (1).

10. Vehicle pneumatic tyre according to one of the preceding Claims 1 to 8, **characterized in that** the sipes (2) are not arranged parallel to any edge of the profile element (1).

11. Vehicle pneumatic tyre according to one or more claims, **characterized in that** the profile element (1) has one or more groove incisions (14) which have a width (15) of 2 mm to 6 mm, preferably of 3 mm, and which are connected to the groove delimiting the profile element (1), reach into the profile element (1) and end in the profile element.

12. Vehicle pneumatic tyre according to one or more claims, **characterized in that** the sipes (2) are 3D sipes, the amplitudes of which decrease in the radial direction and end in a straight line or in an arc without a change of direction in the sipe base.

## Revendications

1. Pneumatique de véhicule comportant une bande de roulement comprenant des éléments profilés (1), dans lequel au moins un élément profilé (1) est doté de plusieurs entailles fines (2) disposées parallèlement les unes aux autres et de manière espacée les unes des autres, dans lequel cet élément profilé (1) présente une largeur maximale (Bmax) à partir de laquelle la largeur de l'élément profilé diminue dans la direction longitudinale de cet élément profilé, et dans lequel chaque entaille fine (2) comprend des parois correspondantes d'entaille fine, lesquelles présentent, en vue de dessus de la bande de roulement, la forme d'une onde d'amplitude déterminée (3), présentant un nombre déterminé de ventres d'onde (4) et présentant une longueur d'onde déterminée (5),
**caractérisé en ce que**
toutes les entailles fines (2) en forme d'ondes présentent, dans une partie déterminée (12) de l'élément profilé, laquelle commence au niveau de la largeur maximale (Bmax) de l'élément profilé et s'étend dans la direction longitudinale de l'élément profilé jusqu'à une largeur minimale (Bmin) de l'élément profilé et s'y termine, des mêmes amplitudes (3) et un même nombre de ventres d'onde (4), mais présentent, dans la direction de la largeur minimale (Bmin), des longueurs d'onde décroissantes (5) des entailles fines (2), la largeur minimale (Bmin) étant la largeur la plus étroite dans l'élément profilé, laquelle satisfait à la condition Bmax / Bmin = 1,1 à 7, avec Bmin = 5 mm à 55 mm.

2. Pneumatique de véhicule selon la revendication 1, **caractérisé en ce que** la largeur minimale (Bmin) est une largeur qui satisfait à la condition Bmax / Bmin = 1,8 à 4,6, avec Bmin = 5 mm à 55 mm.

3. Pneumatique de véhicule selon la revendication 1 ou 2, **caractérisé en ce que** les parois d'entaille fine présentent la forme d'une onde approximativement sinusoïdale, d'une onde étagée ou d'une onde en forme de zigzag.

4. Pneumatique de véhicule selon la revendication 3, **caractérisé en ce que** l'onde étagée comprend des parties alternées de marches (6) et de contremarches (7), les contremarches (7) étant plus courtes que les marches (6), les contremarches (7) étant formées de préférence en tant que droites de même longueur et formant un angle α compris entre 0° et +/- 80° avec la direction longitudinale de l'élément profilé, tandis que les marches (6) sont formées de préférence en tant que rayons et relient respectivement l'une à l'autre deux contremarches adjacentes (7).

5. Pneumatique de véhicule selon la revendication 3, **caractérisé en ce que** la longueur des marches (13) est réduite dans la partie déterminée comportant des entailles fines étagées pour la réduction de la longueur d'onde (5), tandis que toutes les contremarches (7) de toutes les entailles fines (2) sont de même longueur.

6. Pneumatique de véhicule selon l'une ou plusieurs des revendications précédentes, **caractérisé en ce que** l'élément profilé (1) présente, en vue de dessus, une forme trapézoïdale.

7. Pneumatique de véhicule selon l'une des revendications précédentes 1 à 5, **caractérisé en ce que** l'élément profilé (1) présente, en vue de dessus, une forme trapézoïdale double, par le fait que les deux formes trapézoïdales sont disposées de manière adjacente l'une à l'autre par leurs deux côtés de base de même longueur, et **en ce que** chaque entaille fine (2) de l'élément profilé (1) est disposée parallèlement à ces côtés de base de même longueur des trapèzes.

8. Pneumatique de véhicule selon l'une des revendications précédentes 1 à 5, **caractérisé en ce que** l'élément profilé (1) est, en vue de dessus, une combinaison d'une forme trapézoïdale et d'une forme triangulaire, par le fait que la base de la forme triangulaire est disposée de manière adjacente au côté de base de même longueur du trapèze, et **en ce que** chaque entaille fine (2) de l'élément profilé (1) est disposée parallèlement à cette base de la forme triangulaire et au côté de base de même longueur du trapèze.

9. Pneumatique de véhicule selon l'une des revendications précédentes 1 à 8, **caractérisé en ce que** les entailles fines (2) sont disposées approximativement parallèlement à une arête (10, 11) de l'élément profilé (1).

10. Pneumatique de véhicule selon l'une des revendications précédentes 1 à 8, **caractérisé en ce que** les entailles fines (2) ne sont disposées parallèlement à aucune arête de l'élément profilé (1).

11. Pneumatique de véhicule selon une ou plusieurs revendications, **caractérisé en ce que** l'élément profilé (1) comprend une ou plusieurs entailles de rainure (14), lesquelles présentent une largeur (15) de 2 mm à 6 mm, de préférence de 3mm, et lesquelles sont en liaison avec la rainure délimitant l'élément profilé (1), pénètrent dans l'élément profilé (1) et se terminent dans l'élément profilé.

12. Pneumatique de véhicule selon une ou plusieurs revendications, **caractérisé en ce que** les entailles fines (2) sont des entailles fines 3D, dont les amplitudes dans la direction radiale diminuent et se terminent dans le fond d'entaille fine en une ligne droite ou en un arc sans changement de direction.
